# FASCICULE DE BREVET EUROPEEN

(11) **EP 2 828 199 B1**
(45) Date de publication et mention de la délivrance du brevet: **27.04.2016**
(21) Numéro de dépôt: 13710879.1
(22) Date de dépôt: 21.03.2013
(51) Int. Cl.: C01B 33/193

(54) **PROCÉDÉ DE PRÉPARATION DE SILICE PRÉCIPITÉE COMPRENANT UNE ETAPE DE CONCENTRATION MEMBRANAIRE**
VERFAHREN ZUR HERSTELLUNG VON FÄLLUNGSKIESELSÄURE MIT EINEM MEMBRANKONZENTRATIONSSCHRITT
METHOD FOR THE PRODUCTION OF PRECIPITATED SILICA, COMPRISING A MEMBRANE CONCENTRATION STEP

(30) Priorité: 22.03.2012 FR 1252587
(43) Date de publication de la demande: 28.01.2015
(73) Titulaire: RHODIA OPERATIONS, 93306 Aubervilliers (FR)
(72) Inventeur: NEVEU, Sylvaine, 75005 Paris (FR); PINAULT, Anne-Laure, 92160 Antony (FR)
(86) Numéro de dépôt international: PCT/EP2013/055978
(87) Numéro de publication internationale: WO 2013/139934

(56) Documents cités:
- EP-A1- 0 754 650
- WO-A1-96/01787
- WO-A1-02/053497
- Greg Johnson and Brad Culkin: "VSEP vibrating membrane system proves membranes aren't just for water anymore", , mars 2009 (2009-03), XP002690037, Extrait de l'Internet: URL:http://www.vsep.com/pdf/articles/Ind_S tr_Mem_Fil.pdf [extrait le 2013-01-10]

## Description

La présente invention concerne un procédé amélioré de préparation de silice précipitée.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturel(s) ou synthétique(s), en particulier d'élastomère(s), notamment diéniques, par exemple pour les semelles de chaussures, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les gaines, les câbles et les courroies de transmissions.

La silice précipitée est notamment utilisée depuis longtemps comme charge blanche renforçante dans les élastomères, et en particulier dans les pneumatiques.

La préparation de silice précipitée s'effectue généralement par réaction de précipitation entre un silicate, en particulier un silicate de métal alcalin, et un agent acidifiant, suivie d'une étape de séparation par filtration pour obtenir un gâteau de filtration et habituellement d'une étape de lavage dudit gâteau, puis d'une éventuelle étape de délitage du gâteau de filtration et d'une étape de séchage, par exemple par atomisation, dudit gâteau.

Dans le cadre des procédés de l'état de la technique, le gâteau, généralement après une opération de délitage, soumis à l'étape d'atomisation comprend une grande quantité d'eau. La mise en oeuvre de l'étape d'atomisation permet donc notamment d'évacuer cette quantité élevée d'eau, ce qui nécessite une grande consommation de temps et d'énergie.

Ainsi, un des buts de la présente invention consiste à fournir un procédé de préparation de silice précipitée permettant de limiter les dépenses énergétiques notamment en termes de séchage.

L'un des buts de l'invention est notamment de fournir une alternative aux procédés de préparation connus de silice précipitée, qui soit économique et simple de mise en oeuvre.

Un des buts de la présente invention consiste préférentiellement à fournir un procédé permettant de diminuer la consommation énergétique au séchage, notamment par rapport aux procédés de l'état de la technique et ce, en général, d'au moins environ 10 %, en particulier d'au moins environ 15 %, par exemple d'au moins environ 20 %.

Un des buts de la présente invention consiste de préférence à fournir un procédé permettant d'augmenter la productivité du procédé de préparation de silice précipitée, en particulier au niveau de l'étape de séchage, notamment par rapport aux procédés de l'état de la technique, et ce, en général, d'au moins environ 15 %, en particulier d'au moins environ 20 %, par exemple d'au moins environ 25 %.

La présente invention concerne donc un procédé de préparation de silice précipitée comprenant la réaction d'un silicate avec un agent acidifiant pour obtenir une suspension de silice précipitée (S1), suivie d'une étape de séparation pour obtenir un gâteau, d'une étape de délitage dudit gâteau pour obtenir une suspension de silice précipitée (S2) et d'une étape de séchage de cette suspension, et dans lequel une étape de concentration membranaire est effectuée entre ladite étape de délitage et ladite étape de séchage.

En particulier, le procédé selon la présente invention comprend donc les étapes suivantes :
- on fait réagir (réaction de précipitation) au moins un silicate avec au moins un agent acidifiant, de manière à obtenir une suspension de silice précipitée (S1),
- on effectue une étape de séparation solide-liquide, plus particulièrement de filtration, pour obtenir un produit solide, désigné également "gâteau de filtration",
- on soumet ledit gâteau de filtration à une opération de délitage, pour obtenir une suspension de silice précipitée (S2),
- on effectue ensuite une étape de concentration membranaire de ladite suspension (S2), et
- on sèche, de préférence par atomisation, le produit ainsi obtenu.

L'étape spécifique du procédé de l'invention, prise en combinaison avec les autres étapes dudit procédé, consiste en une étape de concentration membranaire permettant d'enlever une quantité élevée d'eau par voie mécanique de la suspension (S2) obtenue après délitage.

Une telle opération, combinée aux autres étapes du procédé, permet alors d'augmenter la teneur en matières sèches du produit avant l'étape de séchage. Le produit qui est ensuite soumis au séchage contient moins d'eau, ce qui entraîne un gain d'énergie pour l'étape subséquente de séchage.

La mise en oeuvre du procédé selon l'invention peut permettre d'augmenter la productivité, en particulier de l'étape de séchage, d'au moins environ 15 %, de préférence d'au moins environ 20%, par exemple d'au moins environ 25 %, par rapport aux procédés de l'état de la technique, de manière avantageuse tout en ne dégradant pas les propriétés de la silice précipitée obtenue, notamment sa dispersibilité, en particulier dans les élastomères.

L'étape de concentration mise en oeuvre implique des techniques membranaires. Elle consiste en particulier à faire circuler la suspension (S2) susmentionnée à travers une membrane et à récupérer le concentrat ainsi obtenu.

Ces techniques membranaires sont bien connues de l'homme du métier.

Selon un mode de réalisation du procédé de l'invention, l'étape de concentration membranaire est effectuée par filtration tangentielle. Cette technique de filtration tangentielle est également bien connue de l'homme du métier.

Ainsi, la filtration tangentielle consiste à faire passer un fluide, à savoir la suspension (S2) susmentionnée, tangentiellement à la surface du filtre. C'est la pression du fluide qui permet à celui-ci de traverser le filtre. Les particules, dans ce cas, restent dans le flux de circulation tangentiel, et le colmatage du media filtrant s'effectue ainsi beaucoup moins vite.

Selon un mode de réalisation du procédé de l'invention, l'étape de concentration membranaire est effectuée par filtration tangentielle standard ou dynamique.

Dans le cas de la filtration tangentielle standard, la membrane utilisée est fixe et c'est donc le fluide, à savoir ici la suspension (S2), qui circule. Dans le cas de la filtration tangentielle dynamique, la membrane est en mouvement. Ces deux techniques de filtration tangentielle sont bien connues de l'homme du métier.

Selon un mode de réalisation préféré du procédé de l'invention, l'étape de concentration membranaire est effectuée par filtration tangentielle dynamique, en particulier vibrante (par exemple à l'aide du système VSEP (*Vibratory Shear Enhanced Processing*) ou rotative.

Selon un mode de réalisation du procédé de l'invention, l'étape de concentration membranaire est effectuée par filtration tangentielle dynamique rotative.

Dans le cadre du procédé selon l'invention, on utilise ainsi par exemple la technique de filtration dynamique tangentielle avec disques rotatifs. Dans ce procédé, des disques céramiques en rotation génèrent alors des turbulences et une vitesse différentielle entre le media filtrant et la suspension. Ces turbulences évitent la formation d'agglomérats solides à la surface des membranes pouvant contrarier la filtration. Cette technologie consiste à enlever l'eau par voie mécanique et non par évaporation, ce qui permet au final de diminuer les dépenses d'énergie.

Selon un mode de réalisation du procédé de l'invention, le produit obtenu à l'issue de l'étape de concentration membranaire est une suspension (S3) de silice précipitée ayant un taux de matières sèches (ou siccité ou teneur en extrait sec) supérieur à 24 %, de préférence d'au moins 26 %, en poids.

Selon un mode de réalisation du procédé de l'invention, le produit obtenu à l'issue de l'étape de concentration membranaire est une suspension (S3) de silice précipitée ayant un taux de matières sèches compris entre 25 et 30 % en poids.

Selon un mode de réalisation du procédé de l'invention, l'étape de concentration membranaire est effectuée à chaud, et notamment à une température comprise entre 40 et 90 °C.

Le procédé selon l'invention concerne un procédé de synthèse de silice de précipitation, c'est-à-dire que l'on met d'abord en oeuvre une étape de précipitation dans laquelle on fait réagir au moins un agent acidifiant avec au moins un silicate, sans limitation à un type particulier de silice de précipitation.

Le procédé selon l'invention peut être mis en oeuvre notamment pour la préparation de silices précipitées telles qu'obtenues selon les procédés décrits par exemple dans les demandes EP 0 520 862, EP 0 670 813, EP 0 670 814, EP 0 917 519, WO 95/09127, WO 95/09128, WO 96/01787, WO 98/54090, WO 03/016215,
WO 2009/112458 ou WO 2012/010712.

La réaction de précipitation par réaction d'un silicate avec un agent acidifiant peut s'effectuer dans le procédé selon la présente invention selon tout mode de préparation, notamment par addition d'un agent acidifiant sur un pied de cuve de silicate, ou bien par addition simultanée, totale ou partielle, d'agent acidifiant et de silicate sur un pied de cuve d'eau, ou de silicate ou d'agent acidifiant.

Le choix de l'agent acidifiant et du silicate se fait d'une manière bien connue en soi. On utilise généralement comme agent acidifiant un acide minéral fort tel que l'acide sulfurique, l'acide nitrique ou l'acide chlorhydrique, ou encore un acide organique tel que l'acide acétique, l'acide formique, l'acide carbonique.

On obtient, à l'issue de l'étape de précipitation, une suspension (ou bouillie) S1 de silice précipitée, à laquelle on peut éventuellement ajouter différents additifs, qui est ensuite séparée.

Selon un mode de réalisation particulier de l'invention, l'étape de séparation mentionnée ci-dessus consiste en une étape de séparation solide-liquide. De préférence, elle consiste en une étape de filtration à l'issue de laquelle on obtient un gâteau de filtration, le cas échéant suivie d'une étape de lavage dudit gâteau.

La filtration peut se faire selon toute méthode convenable, par exemple à l'aide d'un filtre-presse ou un filtre à bande ou un filtre rotatif sous vide.

Le gâteau obtenu est ensuite soumis à une étape de délitage. L'opération de délitage est une opération de fluidification ou liquéfaction, dans laquelle le gâteau de filtration est rendu liquide, la silice précipitée se retrouvant en suspension. En général, cette opération permet notamment d'abaisser la viscosité de la suspension à sécher ultérieurement. Cette opération peut être ainsi réalisée en soumettant le gâteau de filtration à une action chimique, par exemple par addition d'un composé de l'aluminium tel que de l'aluminate de sodium, et/ou d'acide, de préférence couplée à une action mécanique (par exemple par passage dans un bac agité en continu ou dans un broyeur de type colloïdal). La suspension (en particulier aqueuse) S2 obtenue après délitage présente généralement une viscosité relativement faible.

Selon un mode de réalisation, le procédé de l'invention peut comprendre une étape d'émottage entre l'étape de séparation et l'étape de délitage.

Cette étape facultative consiste à émietter le gâteau issu de l'étape de séparation et permet de diminuer la granulométrie dudit gâteau. Par exemple, cette étape peut être mise en oeuvre avec un Nibleur de Gericke, dans lequel le gâteau est forcé au travers d'une grille de diamètre inférieur à 20 mm, de préférence de taille comprise entre 2 et 14 mm. Cette étape d'émottage peut aussi être effectuée par des outils de Wyssmont tels que le *"Rotocage Lumpbreaker*", le *"double Rotocage Lumpbreaker"* ou le *"Triskelion Lumpbreaker".*

La suspension de silice précipitée S2 obtenue à l'étape de délitage est soumise à l'étape de concentration membranaire telle que décrite ci-dessus.

La suspension de silice précipitée S3 issue de l'étape de concentration membranaire est ensuite séchée.

Ce séchage peut se faire selon tout moyen connu en soi.

Selon un mode de réalisation préféré du procédé de l'invention, le séchage est effectué par atomisation.

A cet effet, on peut utiliser tout type d'atomiseur convenable, notamment un atomiseur à turbines, à buses, à pression liquide ou à deux fluides.

De préférence, dans le procédé selon l'invention, l'étape de séparation est effectuée au moyen d'un filtre (en particulier rotatif) sous vide et l'étape de séchage est réalisée à l'aide d'un atomiseur à buses.

Lorsque le séchage est effectué au moyen d'un atomiseur à buses, la silice précipitée susceptible d'être alors obtenue se présente avantageusement sous forme de billes sensiblement sphériques (microperles), de préférence d'une taille moyenne d'au moins 80 µm.

A l'issue de ce séchage, on peut éventuellement procéder à une étape de broyage sur le produit récupéré ; la silice précipitée alors obtenue se présente généralement sous forme d'une poudre, de préférence de taille moyenne comprise entre 5 et 70 µm.

Lorsque le séchage est effectué au moyen d'un atomiseur à turbines, la silice précipitée susceptible d'être alors obtenue peut se présenter sous la forme d'une poudre, par exemple de taille moyenne comprise entre 5 et 70 µm.

Le produit séché (par exemple par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être obtenue à l'issue de cette étape d'agglomération se présente généralement sous forme de granulés, en particulier de taille d'au moins 1 mm, par exemple comprise entre 1 et 10 mm, notamment selon l'axe de leur plus grande dimension.

Les exemples suivants illustrent l'invention sans toutefois en limiter la portée.

### EXEMPLES

### Exemple 1

La suspension de silice précipitée utilisée (S2) est un slurry (bouillie) de silice Z1165MP, issu d'une étape de filtration puis d'une étape de délitage du gâteau obtenu à l'étape de filtration, présentant les caractéristiques suivantes :
Température : 50 °C
pH : 6,0 - 6,5
Humidité : 77 %

Une partie (S'2) de la suspension S2 est séchée directement par atomisation.

L'autre partie de la suspension S2 est soumise à une étape de concentration membranaire sur une unité de filtration DCF 152/0.14 (Kmpt), développant une surface filtrante de 0,14 m² et utilisant des membranes en Al₂O₃ (Kerafol) de diamètre de pores de 200 nm.

La pression transmembranaire est fixée à 0,8 bar et des rétro-lavages à 0,4 bar sont effectués toutes les 4 secondes.

Le débit de perméat est de 25 L/h/m². Le slurry concentré S3 obtenu est à 26 % d'extrait sec.

Le slurry S3 à 26 % d'extrait sec est ensuite atomisé, comme dans le cas de la partie S'2 de la suspension S2.

On constate ainsi un gain en consommation énergétique de 15 % par rapport au séchage direct du slurry S'2 et un gain de productivité associé de 18 %.

Les granulométries des slurries avant et après concentration membranaire sont données dans le tableau suivant.

| Suspension | % particules < 0,5 µm (*) dans la suspension |
|---|---|
| S'2 | 65% |
| S3 | 65% |

| | |
|---|---|
| (*) Le pourcentage de particules ayant un diamètre inférieur à 0,5 µm est mesuré par granulométrie par sédimentation réalisée sur l'appareil Sedigraph 5100 (Micromeretics) à partir du pourcentage de particules inférieures à 0,5 µm. La suspension analysée par cette technique est diluée à 4,6 % en poids dans de l'eau épurée et elle est agitée faiblement. La suspension obtenue est ensuite tamisée à l'aide d'un tamis à 250 µm et l'analyse est réalisée en prenant une gamme de mesure entre 0,3 et 85 µm. | |

Ces données permettent de constater que les actions mécaniques subies par la bouillie (ou slurry) de silice S2 (pour obtenir le slurry S3) ne modifient pas sa teneur en particules fines.

### Exemple 2

La suspension de silice précipitée utilisée (S2) est un slurry (bouillie) de silice Z1165MP, issu d'une étape de filtration puis d'une étape de délitage du gâteau obtenu à l'étape de filtration, présentant les caractéristiques suivantes :
Température : 50 °C
pH : 6,0 - 6,5
Humidité : 77 %

Une partie (S'2) de la suspension S2 est séchée directement par atomisation.

L'autre partie de la suspension S2 est soumise à une étape de concentration membranaire sur une unité de filtration SSDF CRD-01 (Novoflow). Cette unité contient un empilement de 3 disques de 152 mm de diamètre constitués de membranes Kerafol en Al₂O₃ de diamètre de pores de 200 nm), soit une surface filtrante de 0,1 m².

Une pression transmembranaire de 1 bar est appliquée. Un slurry S3 à 27,5 % d'extrait sec est obtenu avec un débit de perméat de 18 L/h/m².

Le slurry S3 à 27,5 % d'extrait sec est ensuite atomisé, comme dans le cas de la partie S'2 de la suspension S2.

On constate ainsi un gain en consommation énergétique 22 % par rapport au séchage direct du slurry S'2 et un gain de productivité associé de 27 %.

Les granulométries des slurries avant et après concentration membranaire sont données dans le tableau suivant.

| Suspension | % particules < 0,5 µm (*) dans la suspension |
|---|---|
| S'2 | 59% |
| S3 | 62% |

| | |
|---|---|
| (*) mesure effectuée comme dans l'exemple 1 | |

Ces données permettent de constater que les actions mécaniques subies par la bouillie (ou slurry) de silice S2 (pour obtenir le slurry S3) ne modifient pas sensiblement sa teneur en particules fines.

### Exemple 3

La suspension de silice précipitée utilisée (S2) est un slurry (bouillie) de silice Z1165MP, issu d'une étape de filtration puis d'une étape de délitage du gâteau obtenu à l'étape de filtration, présentant les caractéristiques suivantes :
Température : 50 °C
pH : 6,0 - 6,5
Humidité : 84 %

Une partie (S'2) de la suspension S2 est séchée directement par atomisation.

L'autre partie de la suspension S2 est soumise à une étape de concentration membranaire sur une unité de filtration tangentielle Carbosep équipée d'une membrane Carbosep M9 ayant un seuil de coupure de 300 kD. Le débit de recirculation est fixé à 800 Uh et la pression transmembranaire moyenne est de 2 bars.

Le slurry concentré S3 obtenu est à 26 % d'extrait sec, avec un débit moyen de perméat de 100 L/h/m².

Le slurry S3 à 26 % d'extrait sec est ensuite atomisé, comme dans le cas de la partie S'2 de la suspension S2.

On constate ainsi un gain en consommation énergétique de 46 % par rapport au séchage direct du slurry S'2 et un gain de productivité associé de 84 %.

Le procédé selon l'invention comprenant une étape de concentration membranaire permet donc de réaliser des économies d'énergie et d'augmenter la productivité au séchage.

## Revendications

1. Procédé de préparation de silice précipitée comprenant la réaction d'un silicate avec un agent acidifiant pour obtenir une suspension de silice précipitée (S1), suivie d'une étape de séparation pour obtenir un gâteau, d'une étape de délitage dudit gâteau pour obtenir une suspension de silice précipitée (S2) et d'une étape de séchage d'une suspension de silice précipitée, procédé dans lequel une étape de concentration membranaire est effectuée entre ladite étape de délitage et ladite étape de séchage.

2. Procédé selon la revendication 1, dans lequel l'étape de concentration membranaire est effectuée par filtration tangentielle.

3. Procédé selon l'une des revendications 1 et 2, dans lequel l'étape de concentration membranaire est effectuée par filtration tangentielle dynamique.

4. Procédé selon l'une des revendications 1 à 3, dans lequel l'étape de concentration membranaire est effectuée par filtration tangentielle dynamique rotative.

5. Procédé selon l'une des revendications 1 à 4, dans lequel le produit obtenu à l'issue de l'étape de concentration membranaire est une suspension de silice précipitée ayant un taux de matières sèches supérieur à 24 %, de préférence d'au moins 26 %, en poids.

6. Procédé selon l'une des revendications 1 à 4, dans lequel le produit obtenu à l'issue de l'étape de concentration membranaire est une suspension de silice précipitée ayant un taux de matières sèches compris entre 25 et 30 % en poids.

7. Procédé selon l'une des revendications 1 à 6, dans lequel l'étape de concentration membranaire est effectuée à une température comprise entre 40 et 90 °C.

8. Procédé selon l'une des revendications 1 à 7, dans lequel une étape d'émottage est effectuée entre l'étape de séparation et l'étape de délitage.

9. Procédé selon l'une des revendications 1 à 8, dans lequel l'étape de séparation consiste en une étape de filtration, le cas échéant suivie d'une étape de lavage.

10. Procédé selon la revendication 9 dans lequel l'étape de filtration est réalisée au moyen d'un filtre sous vide ou d'un filtre-presse.

11. Procédé selon l'une des revendications 1 à 10, dans lequel l'étape de séchage est effectuée par atomisation, en particulier au moyen d'un atomiseur à buses.

12. Procédé selon l'une des revendications 1 à 11, dans lequel le produit issu de l'étape de séchage est soumis à une étape de broyage.

13. Procédé selon l'une des revendications 1 à 12, dans lequel le produit issu de l'étape de séchage ou issu de l'éventuelle étape de broyage est soumis à une étape d'agglomération.

## Patentansprüche

1. Verfahren zur Herstellung von Fällungskieselsäure, umfassend die Umsetzung eines Silikats mit einem Ansäuerungsmittel zum Erhalt einer Suspension von Fällungskieselsäure (S1), gefolgt von einem Schritt der Trennung zum Erhalt eines Kuchens, einem Schritt der Fragmentierung des Kuchens zum Erhalt einer Suspension von Fällungskieselsäure (S2) und einem Schritt der Trocknung einer Suspension von Fällungskieselsäure, wobei zwischen dem Fragmentierungsschritt und dem Trocknungsschritt ein Membranaufkonzentrierungsschritt durchgeführt wird.

2. Verfahren nach Anspruch 1, bei dem der Membranaufkonzentrierungsschritt durch Tangentialfiltration durchgeführt wird.

3. Verfahren nach einem der Ansprüche 1 und 2, bei dem der Membranaufkonzentrierungsschritt durch dynamische Tangentialfiltration durchgeführt wird.

4. Verfahren nach einem der Ansprüche 1 bis 3, bei dem der Membranaufkonzentrierungsschritt durch dynamische Tangentialdrehfiltration durchgeführt wird.

5. Verfahren nach einem der Ansprüche 1 bis 4, bei dem es sich bei dem Produkt aus dem Membranaufkonzentrierungsschritt um eine Suspension von Fällungskieselsäure mit einem Feststoffgehalt von mehr als 24 Gew.-%, vorzugsweise mindestens 26 Gew.-%, handelt.

6. Verfahren nach einem der Ansprüche 1 bis 4, bei dem es sich bei dem Produkt aus dem Membranaufkonzentrierungsschritt um eine Suspension von Fällungskieselsäure mit einem Feststoffgehalt zwischen 25 und 30 Gew.-% handelt.

7. Verfahren nach einem der Ansprüche 1 bis 6, bei dem der Membranaufkonzentrierungsschritt bei einer Temperatur zwischen 40 und 90°C durchgeführt wird.

8. Verfahren nach einem der Ansprüche 1 bis 7, bei dem zwischen dem Trennungsschritt und dem Fragmentierungsschritt ein Klumpenbrechschritt durchgeführt wird.

9. Verfahren nach einem der Ansprüche 1 bis 8, bei dem der Trennungsschritt aus einem Filtrationsschritt, gegebenenfalls gefolgt von einem Waschschritt, besteht.

10. Verfahren nach Anspruch 9, bei dem der Filtrationsschritt mit Hilfe eines Vakuumfilters oder einer Filterpresse durchgeführt wird.

11. Verfahren nach einem der Ansprüche 1 bis 10, bei dem der Trocknungsschritt durch Zerstäubung, insbesondere mit einem Düsenzerstäuber, durchgeführt wird.

12. Verfahren nach einem der Ansprüche 1 bis 11, bei dem das Produkt aus dem Trocknungsschritt einem Zerkleinerungsschritt unterworfen wird.

13. Verfahren nach einem der Ansprüche 1 bis 12, bei dem das Produkt aus dem Trocknungsschritt bzw. aus dem fakultativen Zerkleinerungsschritt einem Agglomerationsschritt unterworfen wird.

## Claims

1. A process for the preparation of precipitated silica comprising the reaction of a silicate with an acidifying agent in order to obtain a suspension of precipitated silica (S1), followed by a separation step in order to obtain a cake, by a step of disintegrating said cake in order to obtain a suspension of precipitated silica (S2), and by a step of drying a suspension of precipitated silica, in which process a membrane concentration step is carried out between said disintegrating step and said drying step.

2. The process as claimed in claim 1, in which the membrane concentration step is carried out by tangential filtration.

3. The process as claimed in either of claims 1 and 2, in which the membrane concentration step is carried out by dynamic tangential filtration.

4. The process as claimed in one of claims 1 to 3, in which the membrane concentration step is carried out by rotary dynamic tangential filtration.

5. The process as claimed in one of claims 1 to 4, in which the product obtained on conclusion of the membrane concentration step is a suspension of precipitated silica having a solids content of greater than 24%, preferably of at least 26%, by weight.

6. The process as claimed in one of claims 1 to 4, in which the product obtained on conclusion of the membrane concentration step is a suspension of precipitated silica having a solids content of between 25% and 30% by weight.

7. The process as claimed in one of claims 1 to 6, in which the membrane concentration step is carried out at a temperature of between 40 and 90°C.

8. The process as claimed in one of claims 1 to 7, in which a lump-breaking step is carried out between the separation step and the disintegrating step.

9. The process as claimed in one of claims 1 to 8, in which the separation step consists of a filtration step, if appropriate followed by a washing step.

10. The process as claimed in claim 9, in which the filtration step is carried out using a vacuum filter or a filter press.

11. The process as claimed in one of claims 1 to 10, in which the drying step is carried out by atomization, in particular using a nozzle atomizer.

12. The process as claimed in one of claims 1 to 11, in which the product resulting from the drying step is subjected to a milling step.

13. The process as claimed in one of claims 1 to 12, in which the product resulting from the drying step or resulting from the optional milling step is subjected to an agglomeration step.
